Europäisches Patentamt

European Patent Office

Office européen des brevets

(11) Publication number: 0 652 390 A1

# EUROPEAN PATENT APPLICATION
## published in accordance with Art. 158(3) EPC

(21) Application number: 93923040.5

(22) Date of filing: 21.10.93

(86) International application number: PCT/JP93/01520

(87) International publication number: WO 94/25779 (10.11.94 94/25)

(51) Int. Cl.⁶: F16H 7/12

(30) Priority: 30.04.93 JP 104539/93
27.08.93 JP 213195/93

(43) Date of publication of application:
10.05.95 Bulletin 95/19

(84) Designated Contracting States:
DE FR GB

(71) Applicant: KOYO SEIKO CO., LTD.
5-8, Minamisenba 3-chome,
Chuo-ku
Osaka-shi,
Osaka 542 (JP)

(72) Inventor: TANAKA, Yasuhito, c/o Koyo Seiko
Co., Ltd.
5-8, Minamisemba 3-chome,
Chuo-ku
Osaka-shi,
Osaka 542 (JP)
Inventor: KADOTA, Yasushi, c/o Koyo Seiko
Co., Ltd.
5-8, Minamisemba 3-chome,
Chuo-ku
Osaka-shi,
Osaka 542 (JP)
Inventor: ARAKI, Satoshi, c/o Koyo Seiko Co.,
Ltd.
5-8, Minamisemba 3-chome,
Chuo-ku
Osaka-shi,
Osaka 542 (JP)
Inventor: YAMAKAWA, Tadasu, c/o Koyo
Seiko Co., Ltd.
5-8, Minamisemba 3-chome,
Chuo-ku
Osaka-shi,
Osaka 542 (JP)

(74) Representative: Sajda, Wolf E., Dipl.-Phys. et
al
MEISSNER, BOLTE & PARTNER
Widenmayerstrasse 48
D-80538 München (DE)

(54) AUTOMATIC TENSIONER.

(57) An automatic tensioner characterized in that a swinging lever (30) having a pulley (10) mounted at the leading end thereof is rotatably supported by a fixed case (20), and that the swinging motion of the swinging arm (30) is damped by virtue of the action of a helical torsion spring (40) and a friction member (60). A coned disc spring (70) is disposed not at the proximal end portion of a hub (31) for the swinging arm (30) where the friction member (60) is disposed but at the leading end portion of the hub (31). Interposed between a plate (80) constituting the fixed side and the swinging arm (30) constituting the rotating side is the friction member (60) which comes into direct contact with the plate (80) and the swinging arm (30). This prevents the generation of rattling noise attributed to play. Even microvibrations can be damped by positively generating swinging resistance.

...

F I G. 1

## Technical Field

The present invention relates to an automatic tensioner, and more specifically to an automatic tensioner for maintaining constant the tension of a belt or the like mounted on a pulley.

## Background of the Invention

Generally, an automatic tensioner is arranged such that a swing arm pivotally supported relative to a fixed case is given rotational spring loads in a predetermined direction by a helical torsion coil spring and swing resistance by a friction member interposed between the swing arm and the fixed case.

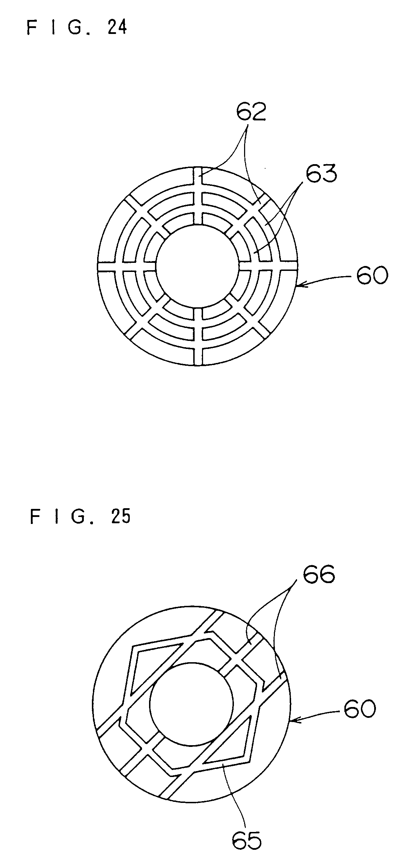

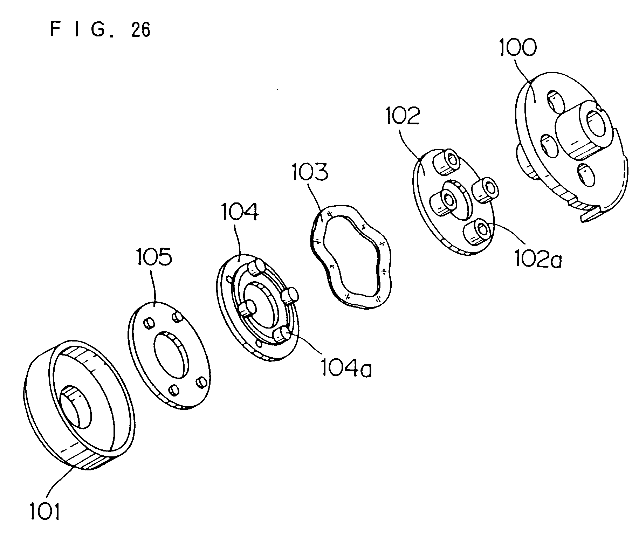

The known automatic tensioner shown in Fig. 26 has a bush member 102, corrugated a sheet spring 103, a bush member 104 and a friction member 105 pressingly held between a swing arm 100 and a fixed side member 101. The bush member 102 is restrained from rotating relative to the swing arm 100 by a boss 102a. By inserting a pin 104a into the boss 102a of the bush member 102, the bush member 104 is restrained from rotating relative to the bush member 102 while permitting expansion and contraction of the corrugated sheet spring 103 interposed between the bush members 102, 104. The friction member 105 is fixed to the bush member 104 by means of dowel joint, and is pushed toward the fixed side member 101 by spring loads of the corrugated sheet spring 103. Thus, the friction member 105 is fixed to the swing arm 100 by a pair of the bush members 102, 104 as being restrained from rotating, and is brought into sliding contact with the fixed side member 101 as pushed by the corrugated sheet spring 103.

However, in the automatic tensioner in which the friction member 105 is indirectly fixed to the swing arm 100 by a pair of the bush members 104, 102, backlash due to the fitting precision of the pin 104a and the boss 102a disposed between the bush members 104, 102 is apt to cause rattle during pivoted motion. The rattle would cause noises during the pivoted motion. In the case of microvibration, the microvibration is absorbed by the rattle, thus failing to produce swing resistance. Consequently, it becomes impossible to damp the microvibration.

In view of the above problems, the present invention is proposed with the object of providing an automatic tensioner capable of preventing noises or defective damping of microvibration.

## Description of Invention

For achieving the above object, a preferred aspect of the present invention provides an automatic tensioner including: an automatic tensioner including: a fixed member; a swing member whose base end is supported by said fixed member rotatably around an axis of rotation of said swing member, and whose tip end rotatably supports a pulley; and a helical torsion coil spring disposed between said swing member and said fixed member substantially concentrically with said axis, said helical torsion coil spring rotatably biasing said swing member in a predetermined direction; said automatic tensioner comprising:

an attaching member for attaching said swing member to a predetermined position of said fixed member in a manner movable along said axis;

a crossed surface formed on one of said fixed member and said swing member, and crossed at a right angle to said axis;

a plate member fixed to said crossed surface;

an opposite surface formed on the other one of said fixed member and said swing member, as opposing to said plate member;

a friction member so interposed between said opposite surface and said plate member as to be contacted with the both; and

biasing means for biasing said swing member in a direction to make said plate member press said opposite surface.

The known example suffers rattle in the direction of rotation because the friction member is indirectly fixed through a plurality of members slidable along the axis to one another. This embodiment of the present invention is inherently rattle-free because the friction member is interposed between the stationary side, or the plate member, and the pivoted side, or the swing member, so as to come into direct contact with both sides.

In a preferred embodiment, said friction member is spaced a predetermined distance away from said helical torsion coil spring along said axis. According to this embodiment, since the friction member is spaced along the axis of rotation a predetermined distance from the helical torsion coil spring, the diameter of the friction member may be increased without interference with the helical torsion coil spring.

In a more preferred embodiment, said helical torsion coil spring is compressed in a direction of said axis, biasing said swing member toward said plate member. This embodiment is arranged such that the helical torsion coil spring is incorporated as compressed, biasing the swing member toward the plate member, and thus greater pressing force may be applied to the friction member. As a result, swing resistance may be increased.

In a preferred embodiment, said friction member is fixed to said opposite surface as integrally rotating therewith. According to this embodiment, since the friction member is fixed to the opposite surface in an integrally movable manner, a frictional surface of the friction member may be specified to the plate member, thereby achieving a stable frictional performance.

A preferred embodiment is arranged such that said friction member is relatively rotatable with respect to said opposite surface and said plate member respectively, and wherein the friction member has different frictional radii on the opposite surface and said plate member. This embodiment defines, as the frictional surface, a surface having a smaller frictional radius between the two surfaces of the friction member. As a result, a stable frictional performance may be achieved. This embodiment further allows to employ materials that have poor wear resistance but have advantages in performance other than wear resistance, as a member for non-frictional surface, thereby enhancing freedom in production.

In a preferred embodiment, a centroid of said friction member is spaced a predetermined distance away from said axis so that an area of a part of said friction member where is strongly pressed during sliding motion, may be made relatively larger than that of the other part of said friction member. In this embodiment, by offsetting the centroid of the friction member from the axis of rotation, the area of a part of the friction member strongly pressed during sliding motion is made relatively larger than the other part thereof. As a result, the friction member may be worn uniformly.

In a preferred embodiment, said friction member is divided into plural parts. This embodiment features the following effects. Specifically, in the cases where the friction member interposed between the plate member and the opposite surface is made in one piece, if the flatness of the plate member and the like is poor, the friction member may be bent and deformed along the plate member and the like, resulting in unstable frictional force or damage on the friction member. Whereas in this embodiment, the friction member is divided into plural parts, thus allowing it to equalize the surface pressure thereupon and to generate stable frictional force. This may improve the durability of the friction member.

In a preferred embodiment, the opposite surface has wear resistance. This embodiment permits maintaining a stable frictional performance for a long period of time. The opposite surface having wear-resistance may be integrally formed on said the other one of said fixed member and said swing member. Alternatively, said opposite surface may be formed on a member fixed to said the other one of said fixed member and said swing member. More preferably, said member to be fixed comprises a plate-like member having plural elastic bending tongues around it, and is fixed to said the other one of said fixed member and said swing member, by an elastic repulsive force due to bending deformation of said elastic bending tongues. This arrangement has the following advantage. Specifically, if said member to be fixed is pressingly fit through a shrink range (by compression deformation), it requires high dimensional precision with respect to either the fixed member or the swing member that is not included the crossed surface. Whereas in the above arrangement, said member to be fixed is pressingly fit by elastic repulsive force due to the bending deformation of the elastic bending tongues, eliminating the need for high dimensional precision.

A preferred embodiment is arranged such that said attaching member attaches said swing member to a predetermined position of said fixed member via said plate member. This embodiment makes it easy to attach the swing member and the plate member to the fixed member.

A preferred embodiment further comprises a shaft-shaped part and a pipe-shaped part, either of which is formed at said fixed member and the other of which is formed at said swing member, wherein the outer peripheral surface of said shaft-shaped part and the inner peripheral surface of said pipe-shaped part opposes to each other concentrically with said axis. Thus the swing member may be supported by the shaft-shaped part and the pipe-shaped part in a stable manner.

In a more preferred embodiment, a distance between an attaching end of said helical torsion coil spring on said swing member and an axis of rotation of said pulley is longer than that between said axis of said swing member and said axis of rotation of said pulley. In this embodiment, if there is a radial gap between the outer peripheral surface of the shaft-shaped part and the inner peripheral surface of the pipe-shaped part fit therewith, or between a member interposed between said two parts and the outer or inner surface thereof, the torsional repulsive force of the helical torsion coil spring always pushes a predetermined position of the inner peripheral surface of the pipe-shaped part or the interposed member relatively to the shaft-shaped part, thereby preventing rattle around the shaft-shaped part during pivoted motion.

In a still more preferred embodiment, said shaft-shaped part is formed at said fixed member and said pipe-shaped part is formed at said swing member;

wherein a tip end of said shaft-shaped part goes through said pipe-shaped part to a side of the swing member opposite to the pipe-shaped part;

wherein said crossed surface comprises a tip end surface of said shaft-shaped part; and

wherein shapes of said friction member, said plate member and said swing member are specified such that a gap defined by the respective outer edges of said friction member, said plate member and said swing member is in a bent form.

This embodiment may prevent soot/dust or muddy water from entering from outside because the gap defined near the outer edge of the plate member is of a bent form. It is therefore possible to increase durability. Further, this embodiment does not require a special dust cover and the like, reducing its production cost.

In a more preferred embodiment, said shaft-shaped part is formed at said fixed member and said pipe-shaped part is formed at said swing member;

wherein said biasing means comprises a coned disc spring arranged in a ring form, whose bearing surface is fit with an outer peripheral surface of said shaft-shaped part and comprises a predetermined surface of said fixed member;

wherein said predetermined surface of said fixed member is provided with an annular recessed groove formed along an outer periphery of a base end of said shaft-shaped part;

wherein an inner surface of said recessed groove comprises a curved surface smoothly connecting said outer peripheral surface of said shaft-shaped part and said predetermined surface of said fixed member; and

wherein a starting end of said curved surface near said pipe-shaped part is located closer to a recessed direction than to said bearing surface to avoid interfere with a circumference of said coned disc spring.

This embodiment has the following effect. Specifically, when an R-shaped chamfer for fillet is formed at the corner defined by the outer peripheral surface of the shaft-shaped part and the surface (bearing surface) of the fixed member, R (radius of the chamfered corner) of the chamfer must be made short to avoid interference with the periphery of the coned disc springs. This would cause a problem that stress concentrates on the chamfer. Meanwhile this embodiment may prevent such stress concentration because the outer peripheral surface of the shaft-shaped part and the surface (bearing surface) of the fixed member is smoothly connected by the curved surface of the notch groove. Further, the starting end of the curved surface of the notch groove near the shaft-shaped part is located closer to the recession than to the bearing surface, and therefore the curved surface does not interfere with the periphery of the coned disc springs. Even when the coned disc springs are kept compressed with the pipe-shaped part of the swing member pressed in during assembly work, the coned disc springs do not interfere with the bent surface.

In a preferred embodiment, said outer peripheral surface of said shaft-shaped part and said inner peripheral surface of said pipe-shaped part are in a form of cone opposing to each other concentrically with said axis;

wherein a pipe-shaped coned member for reducing friction is interposed between said outer peripheral surface of said shaft-shaped part and said inner peripheral surface of said pipe-shaped part; and

wherein said pipe-shaped coned member is biased by said biasing means in a direction of keeping said outer peripheral surface of said shaft-shaped part away from said inner peripheral surface of said pipe-shaped part.

In the above embodiment, if wear particles produced by wear of the inner peripheral surface of the pipe-shaped member accumulates in a gap between a tapered surface comprising the inner peripheral surface of the pipe-shaped member and a tapered surface comprising the outer peripheral surface of the shaft-shaped part opposite thereto, the pipe-shaped member receives the spring load from the biasing means in the direction to increase the distance between the two tapered surfaces, thus preventing locking between the pipe-shaped member and the member opposite thereto due to the closure of said gap.

In a preferred embodiment, said shaft-shaped part is formed at said fixed member and said pipe-shaped part is formed at said swing member, and wherein said fixed member comprises a cylindrical fixed case with a bottom, accommodating said pipe-shaped part of said swing member.

In a preferred embodiment, a frictional surface of said friction member includes plural recessions for accommodating wear particles produced by wear. This embodiment may avoid adverse effects of the wear particles to the frictional surface of the friction member, thus attaining a stable swing resistance for a long period of time.

## Brief Description of the Drawings

Fig. 1 is a schematic vertical sectional view of an automatic tensioner according to an embodiment of the present invention.

Fig. 2 is an enlarged essential sectional view of the automatic tensioner.

Fig. 3 is a sectional view on the line III-III in Fig. 2, illustrating the attached state of a friction member.

Fig. 4 is an enlarged essential sectional view of the automatic tensioner according to another embodiment of the present invention.

Fig. 5 is a partial sectional view in elevation of a toothed lock washer as a frictional resistance part.

Fig. 6 is a plan view of the toothed lock washer.

Figs. 7A and 7B are schematic views sequentially illustrating a process where the toothed lock washer is introduced, Fig. 7A showing a state before introduction and Fig. 7B showing a state after introduction.

Fig. 8 is an enlarged essential sectional view of the automatic tensioner according to another embodiment of the present invention.

Fig. 9 is an enlarged essential sectional view of the automatic tensioner according to still another embodiment of the present invention.

Fig. 10 is an enlarged essential sectional view of the automatic tensioner according to yet another embodiment of the present invention.

Fig. 11 is an enlarged essential sectional view of the automatic tensioner according to still another embodiment of the present invention.

Fig. 12 is an illustrated view of the automatic tensioner according to yet another embodiment of the present invention.

Figs. 13A and 13B are illustrated views showing the load center of a conventional automatic tensioner, illustrating cases of different load centers respectively.

Fig. 14 is a plan view of the friction member according to yet another embodiment of the present invention.

Fig. 15 is a schematic plan view showing an arrangement of the friction member according to another embodiment of the present invention.

Fig. 16 is a schematic plan view of the automatic tensioner according to still another embodiment of the present invention.

Fig. 17 is a sectional view on the line K-K in Fig. 16.

Fig. 18 is an enlarged essential sectional view of the automatic tensioner.

Fig. 19 is an illustrative sectional view showing an essential part of the automatic tensioner.

Fig. 20 is a plan view of a plate.

Fig. 21 is a plan view of the friction member.

Fig. 22 is a plan view of a modified example of the friction member.

Fig. 23 is a plan view of another modified example of the friction member.

Fig. 24 is a plan view of yet another modified example of the friction member.

Fig. 25 is a plan view of still another modified example of the friction member.

Fig. 26 is an exploded perspective view of an essential part of a conventional automatic tensioner.

The following description will discuss in detail an embodiment of the present invention with reference to the accompanying drawings.

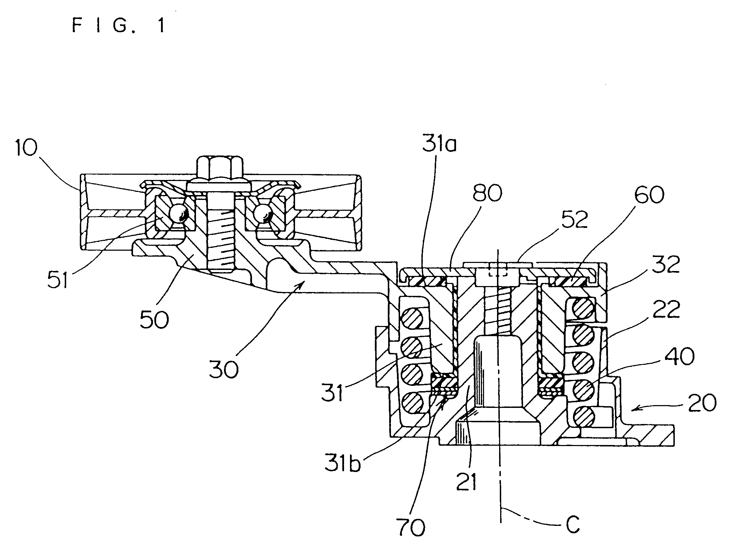

Firstly referring to Figs. 1 to 5, an embodiment of the present invention will be discussed.

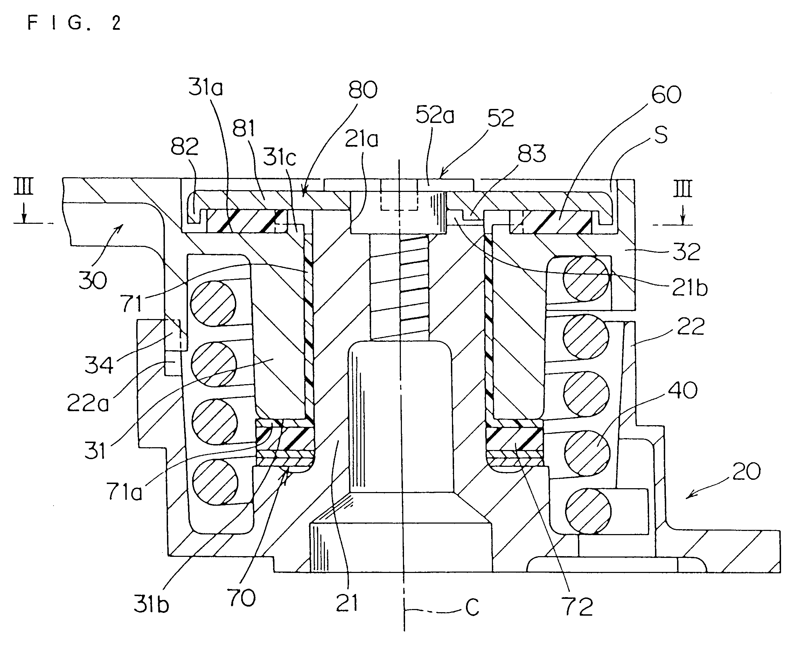

With reference to Figs. 1 and 2, the automatic tensioner of the embodiment comprises: a swing arm 30 whose tip end has a pulley 10 on which a belt is mounted and whose base end side has an annular hub 31 concentric with the axis C of rotation; a double-cup-shaped fixed case 20 rotatably supporting the swing arm 30 with a boss 21 penetrating the hub 31 of the swing arm 30; a helical torsion coil spring 40 incorporated in the fixed case 20 for rotatably biasing the swing arm 30 in a predetermined direction; an annular plate 80 fixed to the upper end surface of the boss 21 by a shoulder bolt 52; an annular friction member 60 made of resin and the like which is interposed between said plate 80 and an end surface 31a on the base end of the hub 31 of the swing arm 30; and coned disc springs 70 for elastically biasing the end surface 31a on the tip end side of the hub 31 toward the plate 80 (upward) so as to pressingly hold the friction member 60 between the plate 80 and end surface 31a on the base end side of the hub 31 of the swing arm 30.

This automatic tensioner is directed to maintain a constant tension of a belt (not shown) mounted on the pulley 10 by using swing resistance of frictional force generated between the friction member 60 and the plate 80 or the end surface 31a on the base end of the swing arm 30. This embodiment is characterized by that the friction member 60 for imparting swing resistance is interposed between the plate 80 on the stationary side and the swing arm 30 as brought into direct contact therewith, thereby eliminating rattle in the rotational direction between the stationary side and the rotated side.

A shaft 50 projects from the rotary end of the swing arm 30. The pulley 10 is rotatably supported by the shaft 50 through a bearing 51. From the base end of the swing arm 30, projected are said hub 31 and a boss 32 concentric with the hub 31, the boss 32 being provided on the outer peripheral side of the hub 31.

Said helical torsion coil spring 40 is disposed between the outer periphery of the hub 31 and the inner periphery of the boss 32. The upper winding end of the helical torsion coil spring 40 is fixed to the swing arm 30, and the lower winding end thereof is fixed to the fixed case 20. The helical torsion coil spring 40 is incorporated in the automatic tensioner as compressed toward an axis. The compressive repulsive force of the helical torsion coil spring 40 pushes the friction member 60 in cooperation with the coned disc springs 70, enhancing the pushing force.

With reference to Fig. 2, the fixed case 20 forms a boss 22 concentric with the boss 21 radially outwardly with respect to the boss 21, and an annular seat 23 as a seat of the coned disc springs 70, which is continuous with the base end of the boss 21, is formed between the two bosses 21, 22. Between the outer periphery of the boss 21 of the fixed case 20 and the inner periphery of the hub 31 of the swing arm 30, interposed is a bush 71 made of resin such as nylon for bringing the both into a smooth rotation relative to each other. This resin bush 71 has an annular flange 71a at the lower end thereof.

A stopper 34 comprising a pin-like projection is integrally formed at a predetermined position of the lower end of the hub 32 of the swing arm 30. The stopper 34 is accommodated in a notch groove 22a formed in the upper end of the boss 22 of the fixed case 20. When the swing arm 30 is rotated, the stopper 34 comes in contact with a wall surface of the notch groove 22a, restraining excessive rotation of the swing arm 30.

The shoulder bolt 52 fixes the plate 80 to the fixed case 20, pressing down the plate 80 with the lower end surface of an upper flange 52a. In this fixed state, a slight gap (not shown) is provided between a shoulder portion 52b of the shoulder bolt 52 and an annular concave 21a formed in the upper surface of the boss 21 on the fixed case 20.

The plate 80 has an annular flat plate 81 letting the shoulder portion 52b of the shoulder bolt 52 penetrate therethrough, a pipe-shaped part 82 formed on the outer circumference of this annular flat plate 81 and slightly projecting downward, and a projection 83 on the lower surface of the annular flat plate 81 near the inner circumference thereof. The projection 83 is introduced into a notch groove 21b formed in the upper surface of the boss 21 of the fixed case 20, restricting the plate 80 from rotating relative to the fixed case 20.

Slits as positioning marks for mounting the plate 80 to the boss 21 of the fixed case 20 are formed at a predetermined positions of the upper surface of the plate 80 and the upper end surface of the hub 32 of the swing arm 30 respectively.

In a free state before assembly, the plate 80 is warped with its outer circumference gone downward in the figure. The plate 80 may become straight flat when fixed by the shoulder bolt 52, so that substantially the entire surface of the plate 80 may come in contact with the friction member 60. If the plate 80 being flat in a free state is fixed with its inner circumference pressed downward by the shoulder bolt 52, the upward reaction force of the coned disc springs 70 is applied radially outward of a place where the downward pressing force of the shoulder bolt 52 is applied. Hence, the inner circumference side of the plate 80 is warped downward, so that only this side comes in contact with the friction member 60 to cause a partial wear. To avoid this, it is therefore necessary to uniformly press the plate 80 against the friction member 60.

A gap S is defined in a bent form by the pipe-shaped part 82 of the plate 80, the end surface 31a on the base end of the hub 31 of the swing arm 30 and the outer edge of the friction member 60. This arrangement may prevent dirt and dust or muddy water from entering the automatic tensioner through the gap S. For this, a sealing structure is employed for the portion around the outer circumference of the plate 80 to eliminate a special dust cover, thus reducing its production cost.

A plurality of the coned disc springs 70 are disposed on the upper surface of the annular seat 23 of the fixed case 20 to bias the hub 31 toward the plate 80 via thrust washer 72 and a lower flange 71a of the resin bush 71 made of low friction member. The lower flange 71a of the resin bush 71 made of low friction member restrains the coned disc springs 70 from rotating in association with the swing arm 30, thereby attaining a stable frictional force. The thrust washer 72 uniformly conducts the pushing force of the coned disc springs 70 to the tip end surface of the hub 31, preventing a local high surface pressure.

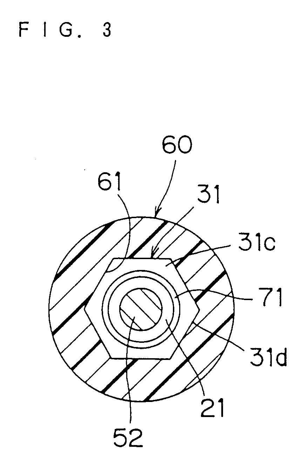

With reference to Figs. 2 and 3, the friction member 60 is made of resins attacking aluminum, and has the inner periphery 61 formed in polygonal shape such as hexagon. The resins may include monomers attacking aluminum and those containing reinforced fibers or additives for adjusting coefficient of friction which attack aluminum. A pipe-shaped projection 31c for fitting in the inner periphery 61 of the friction member 60 is formed on the end surface 31a on the base end of the hub 31 of the swing arm 30. The outer circumference of the pipe-shaped projection 31c has a polygonal shape to match with the inner periphery 61 of the friction member 60. By means of fitting in through the polygonal shape, the friction member 60 is fixed to the swing arm 30 as prohibited of relative rotation.

This embodiment may prevent rattle in the direction of rotation, because the coned disc springs 70 are disposed on the tip end side of the hub 31 but not on the base end side of the hub 31 of the swing arm 30 where the friction member 60 is disposed, and the friction member 60 directly contacting the plate 80 and swing arm 30 is interposed between the plate 80 on the stationary side and the swing arm 30 on the rotated side. More specifically, it is possible to cause resistance as soon as there occur relative rotation between the fixed case 20 and the swing arm 30. Accordingly, noise due to said rattle may be prevented. Furthermore, even microvibration may be assuredly damped by positive swing resistance.

Since the friction member 60 is spaced away from the helical torsion coil spring 40 along the axis of rotation C, the radius of the friction member 60 may be increased without interference with the helical torsion coil spring 40. This may assure a larger frictional radius. The helical torsion coil spring 40 is incorporated as compressed, thus adding the compression repulsive force thereof to the spring loads of the coned disc springs 70, increasing the pressing force to the friction member 60. This realize a higher swing resistance in combination with the larger frictional radius.

The assembly of the automatic tensioner is carried out in the following steps:

1) putting the helical torsion coil spring 40 in a free state in the fixed case 20;

2) placing the swing arm 30 thereupon;

3) rotating the swing arm 30 along with the torsion of the helical torsion coil spring 40, thereby circumferentially aligning the stopper 34 of the swing arm 30 to the notch groove 22a on the fixed case 20;

4) in this state, pushing in the swing arm 30 until the coned disc springs 79 come in substantially close contact, thereby introducing the stopper 34 into the notch groove 22a; and

5) mounting the swing arm 30 by fixing the plate 80 with the shoulder bolt 52.

To fix the plate 80 with the shoulder bolt 52, the operation must be done while pressing down, by using other means than the shoulder bolt 52, the swing arm 30 to the fixed case 20 against the repulsive force of the coned disc springs 70 and helical torsion coil spring 40. During this fixing operation, no extra axial force is applied to the shoulder bolt 52, so that the screw torque of the shoulder bolt 52 may be accurately controlled, thereby avoiding an undesirable looseness of the shoulder bolt 52 afterwards.

The inner circumference of the annular friction member 60, having polygonal form, is fit with the swing arm 30. It is therefore possible to prevent the relative rotation of the friction member 60 and swing arm 30 to each other. Consequently, only a contact surface between the friction member 60 and plate 80 is specified as the frictional surface to secure a stable frictional performance. This is particularly preferable when a member (aluminum) having poor compatibility with the friction member 60 is used as the swing arm 30. This embodiment may adopt a known fixing structure such as press fit and caulking, as the fixing structure of the friction member 60 and swing arm 30.

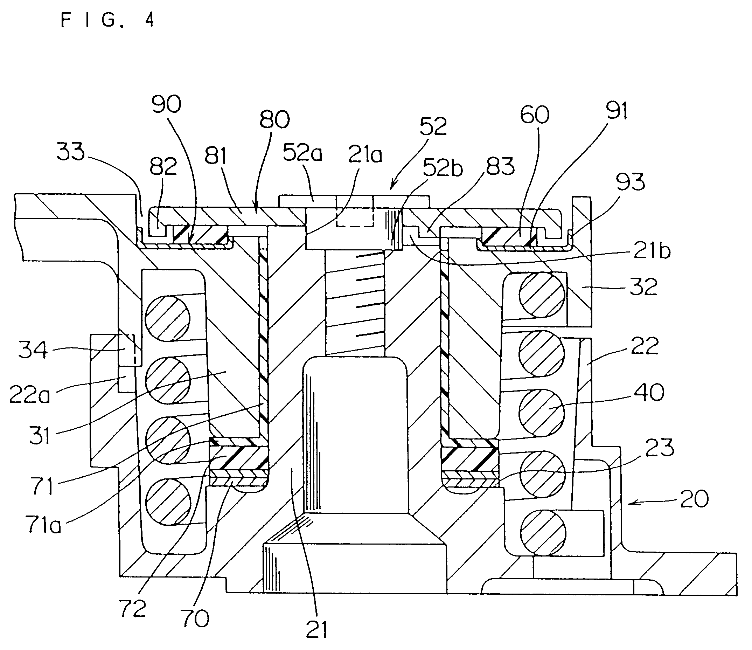

Figs. 4 through 7 show another embodiment of the present invention. This embodiment has a different arrangement from that in Fig. 1 in (i) a circular annular plate made of resin is used as the friction member 60, and (ii) between the friction member 60 and said end surface 31a of the aluminum swing arm 30, there is provided an iron toothed lock washer 90 as a wear-resistant part fixed to the end surface 31a on the base end of the aluminum swing arm 30 in a manner to prevent the relative rotation of the lock washer 90 and the swing arm 30.

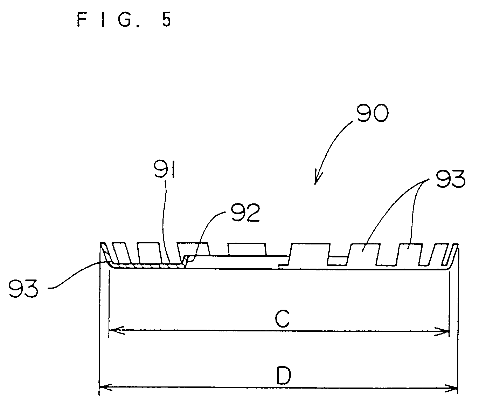

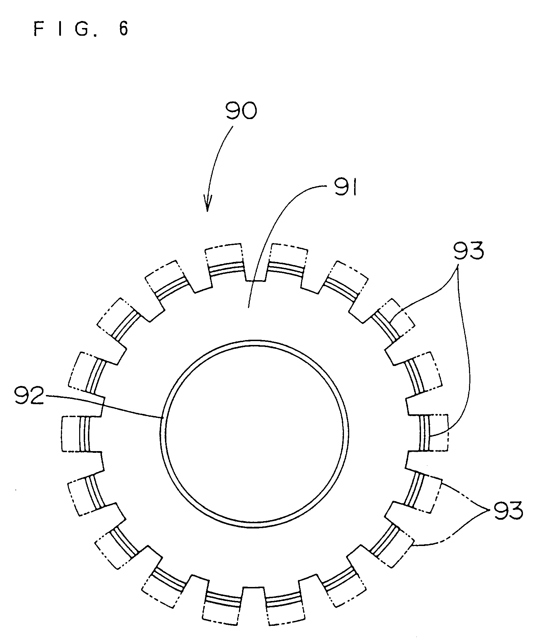

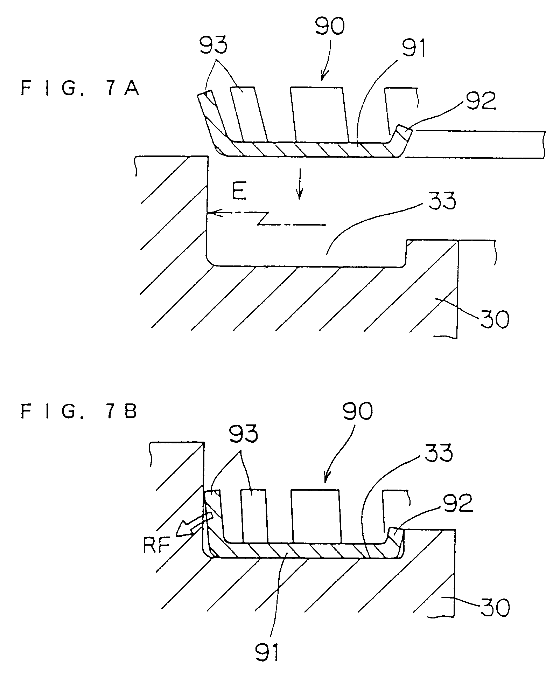

Each two-dot chain line in Figs. 5 and 6 shows the toothed lock washer 90 in a free state, while a solid line in Fig. 6 shows a state where the toothed lock washer 90 is fit in an annular groove 33. Referring to these figures, the toothed lock washer 90 has a short cylindrical part 92 on the inner circumference of the annular main body 91 of the washer, and a plurality of teeth 93 projected in a chrysanthemum-like form on the outer circumference of the main body 91 of the washer. These teeth 93 in a free state are inclined so that the tip ends thereof may open radially outwardly. More specifically in Fig. 5, it is provided that a diameter D is longer than a diameter C. The diameter C is a little shorter than a diameter E of the annular groove 33 (see Fig. 7A) to facilitate introduction of the toothed lock washer 90 into the annular groove 33. The diameter D is made longer than the diameter E of the annular groove 33, and therefore, with reference to Figs. 7A and 7B, the inclined teeth 93 may be bent substantially to the right angle when the toothed lock washer 90 is introduced into the annular groove 33. When the toothed lock washer 90 is completely fit in the annular groove 33, as shown in Fig. 7B, the toothed lock washer 90 is securely fixed to the inner wall of the annular groove 33 by an elastic repulsive force RF due to bending deformation of the teeth 93. Furthermore, the tip ends of the teeth 93 almost cut into the inner wall of the annular groove 33, even more securely fixing the washer.

In this embodiment, the iron toothed lock washer 90 fixed to the swing arm 30 is interposed between the resin friction member 60 and the aluminum swing arm 30 having poor compatibility with the friction member 60, thus forming a frictional surface between iron and resin to achieve a stable frictional performance.

In the conventional press fit by interference (by compression deformation), interference control requires high dimensional precision between the diameter of the annular groove 33 and that of a press fit member. Whereas this embodiment does not require high dimensional precision because the toothed lock washer 90 is fixed in the annular groove 33 by the elastic repulsive force due to the bending deformation of the teeth 93 of the toothed lock washer 90. It is therefore possible to bring the production costs down by the reduction in processing cost. The wear resistant part above mentioned may be mounted to the swing arm 30 by press fit or caulking. Alternatively, at least a part of the swing arm 30 coming into sliding contact may be composed of material having wear resistance.

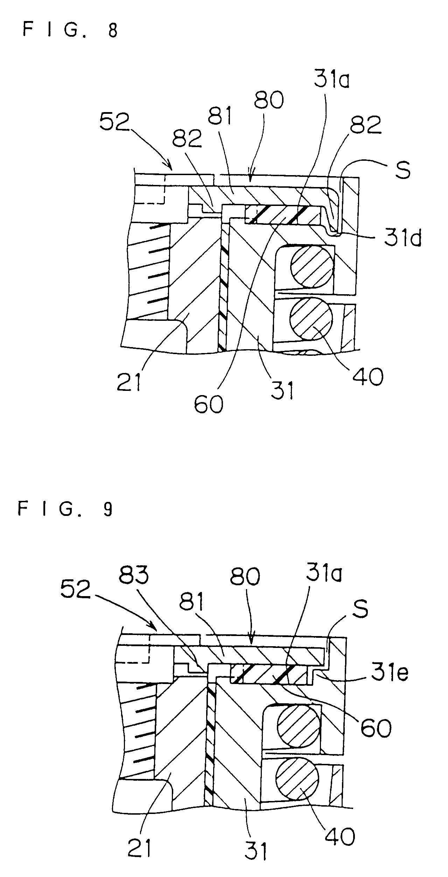

Each of Figs. 8 and 9 shows a modified example of forming the gap S around the outer edge of the plate 80 in bent form in order to prevent the ingress of muddy water and the like.

In Fig. 8, an annular groove 31d is provided on the end surface 31a on the base end of the hub 31 of the swing arm 30, at the side of the outer circumference of the friction member 60. The pipe-shaped part 82 of the plate 80 is adapted to enter the annular groove 31d.

In Fig. 9, the pipe-shaped part 82 of the plate 80 is eliminated, and instead an annular step portion 31e following the lower surface of the flat plate 80 and the outer peripheral surface of the friction member 60 is formed on the end surface 31a on the base end of the hub 31 of the swing arm 30. These embodiments in Figs. 8 and 9 have the same effect as the embodiment in Fig. 1.

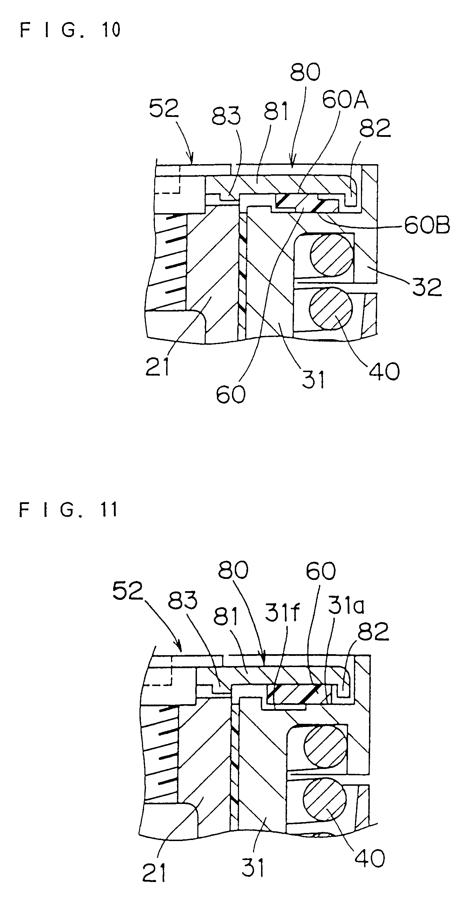

Each of Figs. 10 and 11 shows another embodiment of the present invention. With reference to Fig. 10, this embodiment is characterized in that by composing the friction member 60 itself a structure having a step, a sliding contact surface 60A of the friction member 60 on the plate side is located closer to the inner periphery of the friction member 60 while a sliding contact surface 60B of the friction member 60 on the swing arm side is located closer to the outer periphery of the friction member 60. In this case, the sliding contact surface 60B on the swing arm side has a larger frictional radius than the sliding contact surface 60A on the plate side, and therefore the friction member 60 is rotated integrally with the swing arm 30. Thus, only the sliding contact surface 60A on the plate side is specified as the frictional surface. Accordingly, if the swing arm 30 is made of aluminum having lower wear resistance to the friction member 60, only the other side of the friction member 60 can be used as the frictional surface. This embodiment may provide an automatic tensioner exhibiting excellent wear resistance.

In the embodiment shown in Fig. 11, a plate-like friction member 60 is employed, and the end surface 31a on the base end of the hub of the swing arm 30 is provided with an annular groove 31f for shifting the sliding contact surface 60B of the friction member 60 on the swing arm side toward the outer periphery of the friction member 60. This embodiment has the same effect as that in Fig. 10.

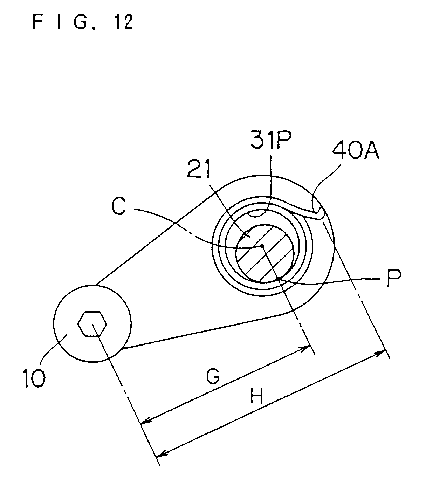

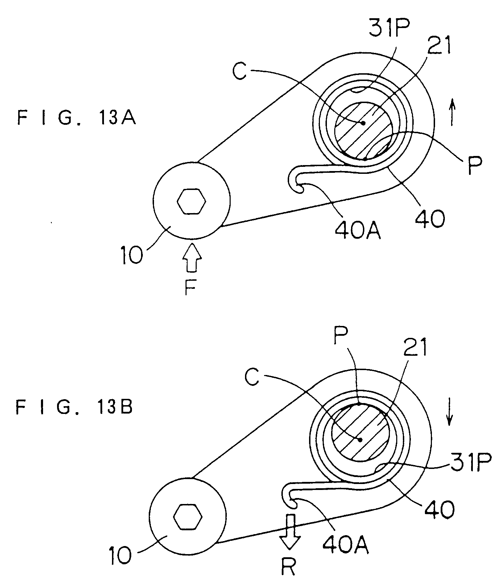

Fig. 12 shows still another embodiment of the present invention. Referring to the same figure, this embodiment is characterized by that the distance from the pulley 10 to the attaching end 41A of the helical torsion coil spring 40 is longer than that to the axis of rotation C (H>G in the figure). Effect of this arrangement will be described as compared to a conventional example shown in Figs. 13A and 13B.

As shown in Fig. 13A, the conventional example is arranged such that a distance from the pulley 10 to the attaching end 40A of the helical torsion coil spring 40 is shorter than that to the axis of rotation C (in terms of design). Because of variation of load on the pulley 10 associated with variation in tension of the belt, the hub 31 is slidingly moved in accordance with the load variation of the pulley when the swing arm 30 is moved. Therefore, as shown in Figs. 13A and 13B, the hub 31 must come in contact with the boss 21 at a different load point P on the inner peripheral surface 31P of the hub 31. This has caused a problem that no frictional damping ability is attained because the swing arm 30 would not be pivoted while the state shown in Fig. 13B is shifted to the state shown in Fig. 13A by the force F of the belt. Furthermore, there have occurred rattle noise whenever the load point P is shifted.

Whereas in this embodiment, even if there is a gap in the radial direction due to fitting precision between the outer peripheral surface of the boss 21 as the axis of rotation C and the inner peripheral surface 31P of the hub 31 supporting the boss 21, the boss 21 is constantly pushed to a predetermined position of the inner peripheral surface 31P of the hub 31 by the torsion repulsive force of the helical torsion coil spring 40 while the pulley 10 is pivoted. As a result, there occurs no rattle around the boss 21 during pivoted motion. Thus, even for a slight variation of load, a predetermined damping force may be attained without exception. Further, there occurs no noise due to rattle. Furthermore, it is not necessary to set a rigorous standard for the fitting precision, thus bringing its production costs down.

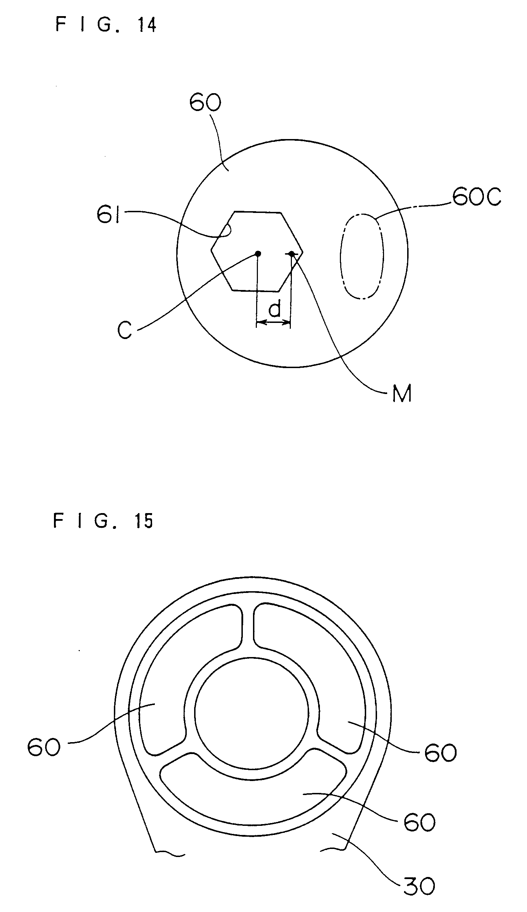

Fig. 14 shows still another embodiment of the present invention. With reference to the same figure, this embodiment differs from that in Fig. 1 in that the centroid M of the friction member 60 is spaced a predetermined distance d away from the axis of rotation C of the swing arm 30, so that the area of a part 60C of the friction member 60 where is strongly pressed during the pivoted motion is made relatively larger than the area of other part. This embodiment makes it possible to uniformly wear the friction member 60, thereby enhancing the durability thereof.

Fig. 15 shows yet another embodiment of the present invention. With reference to the same figure, this embodiment has a different arrangement from the embodiment in Fig. 1 in that the friction member 60 is divided into plural parts. In the cases where the friction member 60 is made in one piece, as in the embodiment shown in Fig. 1, if the flatness of the plate 80 and the like is poor, the friction member 60 is subject to bending deformation along the surface of the plate 80 and the like. The deformation would lead to an unstable frictional force, and there also is a fear of an eventual breakage of the friction member 60. In contrast, this embodiment having a plurality of the friction members 60 can make even the surface pressure applied to each of the friction members 60, permitting a stable frictional force.

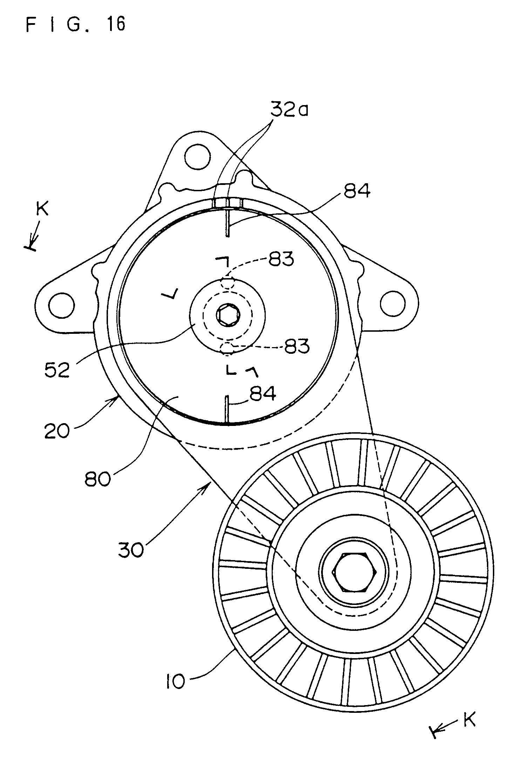

Figs. 16 to 21 show still another embodiment of the present invention. With reference to these figures, this embodiment differs from the embodiment in Fig. 1 in the following six points.

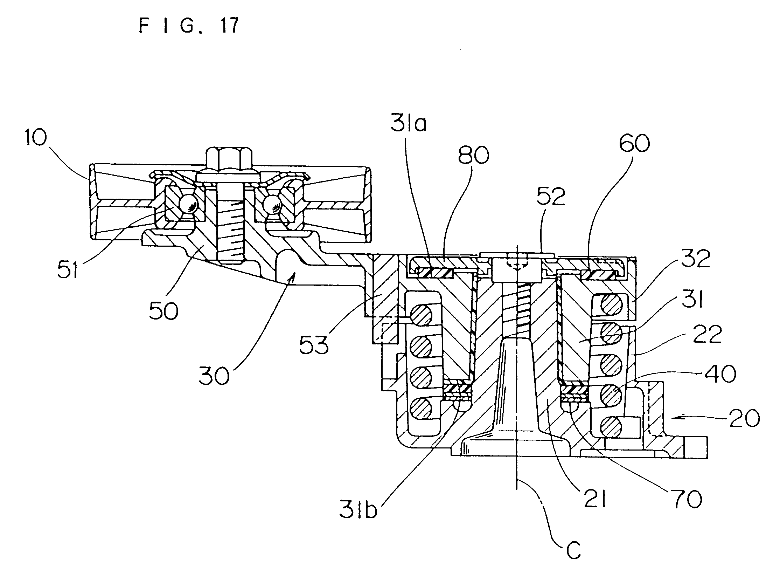

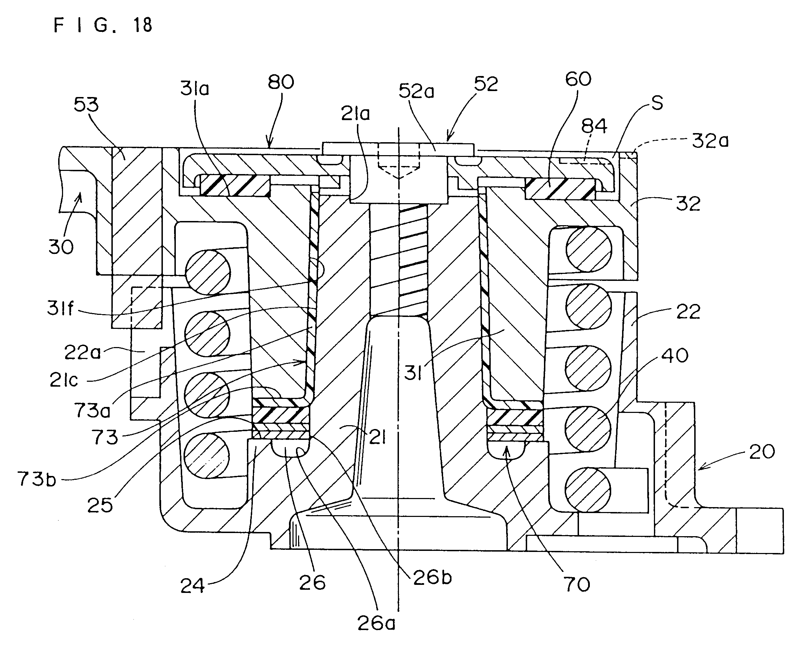

1) With reference to Figs. 17 and 18, an annular recessed groove 26 along the outer peripheral surface of the boss 21 is formed on a bearing surface 25 of the coned disc springs 70 which comprises the upper surface of a step portion 24 formed around the base end of the boss 21. The sectional outline of the inner surface of the recessed groove 26 in the vertical section of the fixed case 20, as shown in Fig. 18, comprises a curved surface 26a for smoothly connecting the outer peripheral surface 21c of the boss 21 and the bearing surface 25. It is so adapted to prevent stress concentration on a corner part formed by the outer peripheral surface 21c of the boss 21 and the bearing surface 25. A starting end 26b of the curved surface 26a closer to the boss 21 is located lower than the bearing surface (toward the concave), assuredly avoiding the interference with the inner circumferences of the coned disc springs 70.

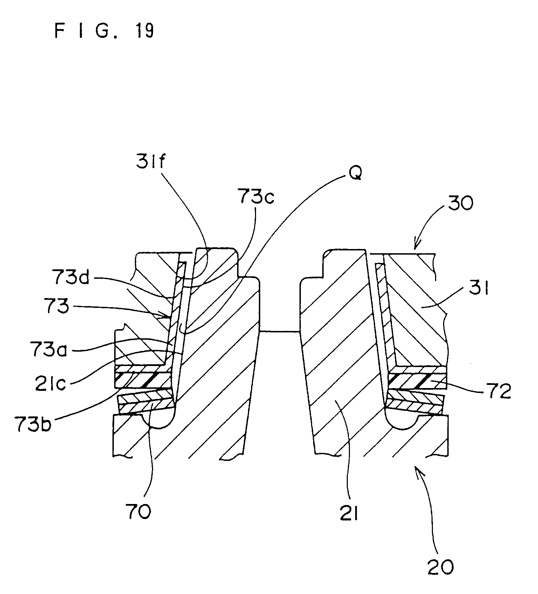

2) With reference to Fig. 18 and Fig. 19 illustrating the essential part, a resin bush 73 as a pipe-shaped member for reducing friction is interposed between the outer peripheral surface 21c of the boss 21 and the inner peripheral surface 31f of the hub 31. The resin bush 73 comprises a coned surface portion 73a interposed between the outer peripheral surface 21c and the inner peripheral surface 31f, and an annular flanged portion 73b provided at the lower end of the coned surface portion 73a. The outer peripheral surface 21c of the boss 21 is made in the form of coned surface having a cone angle coincidental with the inner peripheral surface 73c of the coned surface portion 73a. The inner peripheral surface 31f of the hub 31 is made in the form of coned surface having a cone angle coincidental with the outer peripheral surface of the coned surface portion 73a. An annular shim member 72 is interposed between the annular flanged portion 73b of the resin bush 73 and the coned disc springs 72. The resin bush 73 receives the spring loads of the coned disc springs 70 via said shim member 72, being biased upward, or in a direction separating the inner peripheral surface 73c of the coned surface portion 73a away from the outer peripheral surface 21c of the boss 21.

The above arrangement has the following effect. Specifically, the inner peripheral surface 73c of the coned surface portion 73a of the resin bush 73 and the outer peripheral surface 21c of the boss 21 slide to each other to wear the resin bush 73; even if wear particles accumulate in a gap Q between the inner peripheral surface 73c and outer peripheral surface 21c, the coned disc springs 70 bias the resin bush 73 in the direction expanding the gap Q, thereby preventing the resin bush 73 and the boss 21 from being locked by the closure of the gap Q.

3) The embodiment in Fig. 1 is arranged such that a part where the friction member 60 is fit with the pipe-shaped projection 31c of the hub 31 is made in a polygonal form to restrain the relative rotation of the friction member 60 with respect to the hub 31, thereby allowing the friction member 60 to rotate integrally with the hub 31.

In this embodiment, the inner peripheral surface of the friction member 60 is of cylindrical surface, and there employ no means for restraining the relative rotation of the friction member 60 with respect to the hub 31. Therefore, the friction member 60 is free to rotate between the hub 31 and plate 80. However, the inventors of the present invention have found that the friction member 60 is allowed to rotate only in the early period of the operation of the automatic tensioner. More specifically, after a certain period of the use of the automatic tensioner, the soft aluminum hub 31 is worn to produce wear particles which are caught between the lower surface of the friction member 60 and the end surface 31a on the base end of the hub 31. This increases the coefficient of friction between the friction member 60 and the end surface 31a on the base end, thus being larger than that between the friction member 60 and plate 80. Consequently, the friction member 60 would rotate integrally with the hub 31, resulting in a constant slide against the plate 80. From this time on, there may obtain a given swing resistance. The friction member 60 and the hub 31 are locked to each other to rotate in unison in a relatively earlier period of the operation of the automatic tensioner, and will not slide each other afterwards. It is therefore possible to minimize damage to the end surface 31a on the base end of the hub 31.

This embodiment need not employ the structure for restraining the relative rotation of the friction member 60 with respect to the hub 31, resulting in less production costs. The hub 31 may be made of materials less harder than the plate 80 made of iron materials. The examples of such materials include copper, magnesium or other light metals. Alternatively, the hub 31 may be arranged such that only a part coming in sliding contact with the friction member 60 is composed of a separate material selected from the above light metals.

4) In the embodiment in Fig. 1, by inserting the projection 83 at the lower surface of the plate 80 in the notch groove 21b formed in the end surface of the boss 21, the relative rotation of the plate 80 with respect to the boss 21 is prohibited. Further this embodiment is provided with a positioning slit 84 in the outer edge of the upper surface of the plate 80, which is used in mounting the plate 80 to the boss 21. The slit 84 is aligned between a pair of positioning slits 32a formed in the upper end surface of the hub 32 of the swing arm 30.

With reference to Figs. 16, 18 and 20, a pair of projections 83 are provided on the lower surface of the plate 80 symmetrically across the axis, and a pair of positioning slits 84 are also provided on the upper surface of the plate 80 symmetrically across the axis (in the same direction as the above).

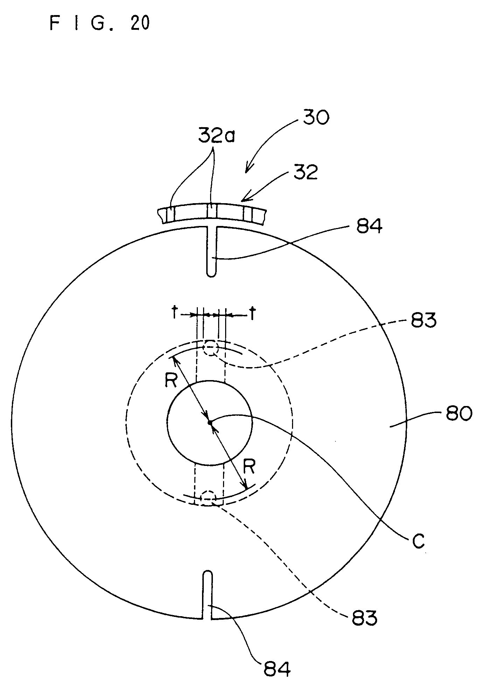

Referring to Fig. 20, this embodiment permits to double a span R for preventing backlash in the conventional example, expressed as $2 \times R$. Consequently, the allowance of the positioning slits 84 in the rotational direction can be reduced to t, a half of $2 \times t$ in the conventional example, as expressed by an equation of $2 \times t \times 1/2 = t$. Further, the projections 83 and positioning slits 84 are provided in pairs symmetrically across the axis of rotation C, and therefore it is not necessary to confirm the direction of plate 80 in the assembly work, thus preventing an erroneous mounting.

5) In the embodiment in Fig. 1, the stopper 34 integrally formed with the swing arm 30 is inserted in the notch groove 22a of the boss 22 of the fixed case 20. In this embodiment, the stopper 34 comprises a pin member separate from the swing arm 30.

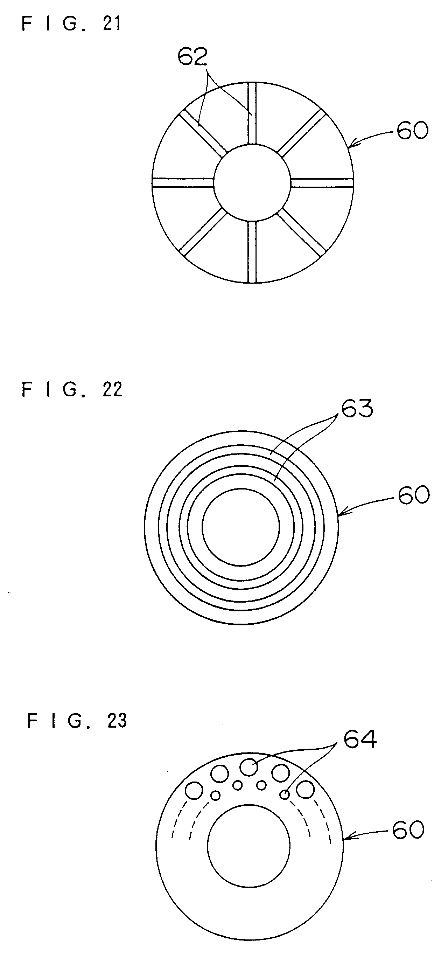

6) With reference to Fig. 21 showing the upper surface of the friction member 60, a plurality of grooves 62 are radially formed in the upper surface as the frictional surface of the friction member 60. Since the wear particles produced from the frictional surface is discharged in the grooves 62, the space between the frictional surface and the plate 80 is kept clean of wear particles. Thus, a stable damping performance may be attained for a long period of time.

As a modification of the grooves 62 in Fig. 21, concentrical grooves 63 may be provided as shown in Fig. 22. As shown in Fig. 23, the grooves 62 may be replaced by a plurality of recessions 64. As further shown in Fig. 24, radial grooves 62 may be employed in combination with the concentrical grooves 63. As shown in Fig. 25, an annular groove 65 in a polygonal form may be employed in combination with slanted grooves 66.

The present invention may be embodied in other specific forms without departing from the spirit or essential characteristics thereof.

## Claims

1. An automatic tensioner including: a fixed member; a swing member whose base end is supported by said fixed member rotatably around an axis of rotation of said swing member, and whose tip end rotatably supports a pulley; and a helical torsion spring disposed between said swing member and said fixed member substantially concentrically with said axis, said helical torsion coil spring rotatably biasing said swing member in a predetermined direction; said automatic tensioner comprising:

   an attaching member for attaching said swing member to a predetermined position of said fixed member in a manner movable along said axis;

   a crossed surface formed on one of said fixed member and said swing member, and crossed at a right angle to said axis;

   a plate member fixed to said crossed surface;

   an opposite surface formed on the other one of said fixed member and said swing member, as opposing to said plate member;

   a friction member so interposed between said opposite surface and said plate member as to be contacted with the both; and

   biasing means for biasing the swing member in a direction to make said plate member press said opposite surface.

2. An automatic tensioner according to Claim 1, wherein said friction member is spaced a predetermined distance away from said helical torsion coil spring along said axis.

3. An automatic tensioner according to Claim 2, wherein said helical torsion coil spring is compressed in a direction of said axis, biasing said swing member toward said plate member.

4. An automatic tensioner according to Claim 1, wherein said friction member is fixed to said opposite surface as integrally rotating therewith.

5. An automatic tensioner according to Claim 1, wherein said friction member is relatively rotatable with respect to said opposite surface and said plate member respectively, and wherein the friction member has different frictional radii on the opposite surface and said plate member.

6. An automatic tensioner according to Claim 1, wherein a centroid of said friction member is spaced a predetermined distance away from said axis so that an area of a part of said friction member which is strongly pressed during sliding motion may be made larger than that of the other part of said friction member.

7. An automatic tensioner according to Claim 1, wherein said friction member is divided into plural parts.

8. An automatic tensioner according to Claim 1, wherein said opposite surface has wear resistance.

9. An automatic tensioner according to Claim 8, wherein said opposite surface is integrally formed on said the other one of said fixed member and said swing member.

10. An automatic tensioner according to Claim 8, wherein said opposite surface is formed on a member fixed to said the other one of said fixed member and said swing member.

11. An automatic tensioner according to Claim 10, wherein said member to be fixed comprises a plate-like member having plural elastic bending tongues around it, and is fixed to said the other one of said fixed member and said swing member, by an elastic repulsive force due to bending deformation of said elastic bending tongues.

12. An automatic tensioner according to Claim 1, wherein said attaching member attaches said swing member to a predetermined position of said fixed member via said plate member.

13. An automatic tensioner according to Claim 1 further comprises a shaft-shaped part and a pipe-shaped part, either of which is formed at said fixed member and the other of which is formed at said swing member, wherein the outer peripheral surface of said shaft-shaped part and the inner peripheral surface of said pipe-shaped part opposes to each other concentrically with said axis.

14. An automatic tensioner according to Claim 13, wherein a distance between an attaching end of said helical torsion coil spring on said swing member and an axis of rotation of said pulley is longer than that between said axis of said swing member and said axis of rotation of said pulley.

15. A automatic tensioner according to Claim 13, wherein said shaft-shaped part is formed at said fixed member and said pipe-shaped part is formed at said swing member;
wherein a tip end of said shaft-shaped part goes through said pipe-shaped part to a side of the swing member opposite to the pipe-shaped part;
wherein said crossed surface comprises a tip end surface of said shaft-shaped part; and
wherein shapes of said friction member, said plate member and said swing member are specified such that a gap defined by respective outer edges of said friction member, said plate member and said swing member is in a bent form.

16. An automatic tensioner according to Claim 13, wherein said shaft-shaped part is formed at said fixed member and said pipe-shaped part is formed at said swing member;
wherein said biasing means comprises a coned disc spring arranged in a ring form, whose bearing surface is fit with an outer peripheral surface of said shaft-shaped part and comprises a predetermined surface of said fixed member;
wherein said predetermined surface of said fixed member is provided with an annular recessed groove formed along an outer periphery of a base end of said shaft-shaped part;
wherein an inner surface of said recessed groove comprises a curved surface smoothly connecting said outer peripheral surface of said shaft-shaped part and said predetermined surface of said fixed member; and
wherein a starting end of said curved surface near said pipe-shaped part is located closer to a recessed direction than to said bearing surface to avoid interfere with a circumference of said coned disc spring.

17. An automatic tensioner according to Claim 13, wherein said outer peripheral surface of said shaft-shaped part and said inner peripheral surface of said pipe-shaped part are in a form of cone opposing to each other concentrically with said axis;
wherein a pipe-shaped coned member for reducing friction is interposed between said outer peripheral surface of said shaft-shaped part and said inner peripheral surface of said pipe-shaped part; and

wherein said pipe-shaped coned member is biased by said biasing means in a direction of keeping said outer peripheral surface of said shaft-shaped part away from said inner peripheral surface of said pipe-shaped part.

18. An automatic tensioner according to Claim 13, wherein said shaft-shaped part is formed at said fixed member and said pipe-shaped part is formed at said swing member, and

wherein said fixed member comprises a cylindrical fixed case with a bottom, accommodating said pipe-shaped part of said swing member.

19. An automatic tensioner according to Claim 1, wherein a frictional surface of said friction member includes plural recessions for accommodating wear particles produced by wear.

F I G. 1

EP 0 652 390 A1

FIG. 2

F I G. 3

F I G. 5

F I G. 6

F I G. 7 A

F I G. 7 B

F I G. 8

F I G. 9

F I G. 10

F I G. 11

F I G. 12

F I G. 13A

F I G. 13B

F I G. 14

F I G. 15

F I G. 16

EP 0 652 390 A1

FIG. 18

F I G. 19

F I G. 20

FIG. 21

FIG. 22

FIG. 23

F I G. 24

F I G. 25

EP 0 652 390 A1

# INTERNATIONAL SEARCH REPORT

International application No.

PCT/JP93/01520

### A. CLASSIFICATION OF SUBJECT MATTER

Int. Cl$^5$ F16H7/12

According to International Patent Classification (IPC) or to both national classification and IPC

### B. FIELDS SEARCHED

Minimum documentation searched (classification system followed by classification symbols)

Int. Cl$^5$ F16H7/12

Documentation searched other than minimum documentation to the extent that such documents are included in the fields searched

| | |
|---|---|
| Jitsuyo Shinan Koho | 1926 - 1993 |
| Kokai Jitsuyo Shinan Koho | 1971 - 1993 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP, B2, 62-2182 (Ritens Automotive Inc.), January 19, 1987 (19. 01. 87), Fig. 3 & US, A, 281501 | 1-19 |
| A | JP, A, 63-47552 (Koyo Seiko K.K.), February 29, 1988 (29. 02. 88), & US, A, 447552 & DE, A1, 3225411 | 1-19 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| November 26, 1993 (26. 11. 93) | January 6, 1994 (06. 01. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)